# EUROPEAN PATENT SPECIFICATION

(11) **EP 3 662 753 B1**
(45) Date of publication and mention of the grant of the patent: **24.01.2024**
(21) Application number: 19213487.2
(22) Date of filing: 04.12.2019
(51) Int. Cl.: A21C 5/00, A23G 3/20, B65B 3/12, A23G 1/04, A23G 3/02, A23G 9/24, A23G 9/28, A21C 9/04, A21C 9/06, A21C 15/00, A23G 1/00, A23G 3/34, A23P 20/25

(54) **LEAKTIGHT FOOD FILLING DEPOSITION SYSTEM**
AUSLAUFDICHTES LEBENSMITTELABFÜLLUNGSSYSTEM
SYSTÈME DE DÉPÔT ÉTANCHE POUR LE REMPLISSAGE D'ALIMENTS

(30) Priority: 05.12.2018 TR 201818670
(43) Date of publication of application: 10.06.2020
(73) Proprietor: Eti Gida Sanayi Ve Ticaret Anonim Sirketi, Eskisehir (TR)
(72) Inventor: GORGULU, AHMET, ESKISEHIR (TR)
(74) Representative: Sevinç, Cenk

(56) References cited:
- GB-A- 695 329
- US-A- 5 463 878
- US-A1- 2010 133 360

## Description

### Technical Field of the Invention:

The present invention is defined in the appended claims and relates to a leaktight food filling deposition system providing ease of mounting/demounting, maintenance and cleaning.

The present invention is defined in the appended claims and particularly relates to a deposition system for depositing food fluids of various temperatures, acidities, viscosities and densities onto, between and into the food products, said deposition system being individually or integrally operated, requiring no maintenance, having a high deposition capacity and comprising low weight deposition nozzles and a low-weight manifold.

### State of the Art:

Devices capable of depositing fluid food inputs (materials such as batters, jams, jellies, creams, chocolates, etc.) in certain volumes and shapes at specific positions are called depositors. Depositors are used for depositing foodstuffs such as fluid batter, chocolate, cream, jelly marshmallow and the like. Primitive versions thereof are manually operated single deposition apparatuses of injector and bag type. In addition to depositing of batters for cakes, crackers and biscuits in a quantity-, shape- and position-controlled manner, they function to combine the product, such as cakes, biscuits and crackers with filling materials in a quantity- and position-controlled manner before and after baking. Moreover, they are used for depositing finished products, such as chocolates, creams, jams, etc. in a quantity-, position- and geometry-controlled manner. According to the newly developed depositor, more than one type of fluid food input can be supplied simultaneously and accurately.

In general, food depositors are operated with apparatuses such as a piston and rotary valve assembly, together with a piston and a rotary valve, geared rollers and opening-closing mechanisms and the like. Such depositors can be used with an opened chamber and a closed chamber. Open-chambered depositors can be operated at low rates (a maximum speed of 25-30 deposits/min) and lighter weight pressurized depositors can reach to a speed between 300-350 deposits/min based on the viscosity of the fluid and the amount of deposits.

Manifolds move orbitally in vertical and horizontal directions for deposition by robotic or mechanic means. Thus, their minimal individual weights have an influence on the inertial forces occurring at high speeds and the machine speed and the machine design is directly affected by the manifold weight.

Another type of depositor is used commonly in applications in which the depositor is stationary or is moved at low speeds.

The object of the newly developed nozzle, and the manifold to which the nozzles are connected, is to solve the problems which are encountered in depositor manifolds capable of depositing at high rates and which have an influence on the product quality, lead to loss of material and damage the machinery. In addition, it is intended to develop a novel deposition system providing a fast product replacement and allowing each nozzle to be also operated independently.

Based on a review of the state of the art, patent document numbered "TR2018/13239" has been examined. According to the abstract of the invention forming the subject matter of the application, "The invention relates to a depositor comprising a cassette, which allows for depositing the final product in fluid form into the molds with an accurate basis weight in the manufacturing lines used in chocolate production and for distributing the inputted chocolate into the molds via a rotary and injector system in the product chamber arranged in the lower part. In particular, the invention relates to a device having an intake/pulling surface and an exhaust surface, which separates an injection system from a product chamber by positioning between the product chamber and a cassette; transfers the product received from the chamber to the injection system by bringing the product into an intake and exhaust position by means of a movement of a rotary driving member, and/or holds the product within itself".

Based on a review of the state of the art, patent document numbered "TR2008/07074" has been examined. According to the abstract of the invention forming the subject matter of the application, "The invention relates to fully automated deposition machines having at least one lower/upper object separator, at least one upper object holder, at least one alt object holder, at least one upper conveyor, at least one lower conveyor, for allowing objects made of any material to move in a certain sequence after the production stage, comprising at least one inverting apparatus having a holder placed on the lower conveyor allowing for the objects moving received in a sequence from a gap between the lower/upper object separator and the upper conveyor to be inverted and capable of releasing the object thereon in an inverted position with circular motions onto the lower conveyor".

Based on a review of the state of the art, patent document numbered "US2009090432" has been examined. The invention forming the subject matter of the application describes a depositor for supplying the measured amounts of batter to baking containers and a method of operation thereof.

Based on a review of the state of the art, patent document numbered "US2004191367" has been examined. The invention forming the subject matter of the application describes a depositor for releasing a plurality of independent flows of food with various fluidities (color and/or composition) at specified intervals and a method for forming a striped foodstuff.

Based on a review of the state of the art, patent document numbered "US2010133360A1" has been examined. The invention forming the subject matter of the application describes a liquid food dispensing apparatus capable of dispensing a wide range of liquid foods having different fluid characteristics, including viscosity, temperature requirement, particulate inclusion, and abrasiveness. Further, the liquid food dispensing apparatus is capable of dispensing various liquid foods in various applications requiring different product pressure, product quantity and mode of delivery.

Based on a review of the state of the art, patent document numbered "US5463878A" has been examined. The invention forming the subject matter of the application describes a new and improved apparatus for refrigerating and dispensing soft serve food products. The mentioned invention is to provide such a self-service, soft serve dispensing apparatus which includes a product dispensing valve which is normally closed and which may be conveniently opened by a switch actuated by a customer, and wherein the dispensing valve returns to a closed position upon release by the customer of the product dispensing switch.

Based on a review of the state of the art, patent document numbered "GB695329" has been examined. The invention forming the subject matter of the application describes filling machines for feeding predetermined quantities of liquid to moulds, either singly, or simultaneously to a series of identical confection mould cavities. The present invention teaches the use of solenoid valves to activate the vertical up and down movement of the stem and valves that open and close the valve seats of metering tubes.Deposition apparatuses used in the state of the art have problems leading to major quality issues such as product replacement, fluid leakages resulting from wear in short time, contaminations of food with metal or plastic, speed issues, leakage issues, maintenance and cleaning issues. Such manifolds consisting of aluminum, bronze, stainless steel and engineering plastics and operating with narrow running clearances (tolerance) wear in short time and result in contamination of the food with non-food materials. Moreover, especially when processing materials containing sugar derivatives, crystallization and carbonization of the sugar due to the high heat and temperatures in running clearances lead to wearing and jamming in short time. Also, in these systems there is no feature of product presence-absence notification and individual operability.

Some types of depositors used in the state of the art may have many holes. Adjusting bolts attached to an upper plate are used for the individual adjustment of a fluid deposited from each of the holes of such manifolds. The whole manifold should be replaced in situations where the number of nozzles will vary according to changes in the product pitch. Due to the running clearance between the rotary valve and the body in which the valve operates, rotary valve blokes the chamber pathway with a 45-90-degree rotation. The requirement of a manifold to move at high speeds (150 stroke/min) and the weight become very important. Narrow running clearances preventing leak-tightness, crystalline materials (sugar, etc.) in food inputs, temperature, acidity and pressure will result in deformations and leakages will become to occur in short time. In general, the whole manifold should be replaced due to the wearing of the body. Also, because of the narrow running clearances, the rotary valve will stick to the body and become blocked due to the leakage of fluid into the running clearance. Due to the movement of the rotary valve, and the acidity and temperature of the fluid, the body, the lid, the chamber and the nozzle plate will generally wear, resulting in the contamination of food with the wearing material.

In such depositors provided with pressurized rotary valves used in the state of the art, prismatic valves moving longitudinally are used in addition to rotary valves. In this manifold, the axial movement of the valve within the prismatic slot is more difficult due to the operation accuracy and the angled structure, causing leakages to occur in short time. Especially in cases where hot fluids are used, running clearances will deform due to the thermal expansion differences between materials, and narrow running clearances will lead to blockades and wide running clearances will lead to leakages. Since the valve is one piece, there is no possibility of a single deposit. Because of the operation under pressure and the absence of a separate piston assembly, a back-suction technique used to prevent dripping and leakage after depositing is applied.

Depositors using non-pressurized rotary pistons used in the state of the art generally operates at low speeds. In these systems, the fluid is sucked from a container (vessel) by means of a piston carrying out intake and exhaust operations and a cylinder thereof, and the fluid is deposited to a desired position by the rotational movement of the rotary valve in a direction from the container to the deposition site. The number of deposits in this system can be equal to the number of pistons. Based on the viscosity and density of the fluid and the geometrical height control accuracy of the fluid in the container, a deposit quantity sensitivity occurs.

As a consequence, due to the problems mentioned above and the inability of the present solutions about the subject matter, there is a need for an improvement in the related art.

### Objects of the Invention:

The most important object of the present invention is to develop a nozzle that is not leaky or dripping.

A further object of the present invention is to avoid leakages and material contaminations by a specific opening-closing mechanism and a sealing design.

The most important object of the present invention is to eliminate the rotational or frictional members in contact with the fluid, and to provide for simplicity, possibility of individual operation and lightness.

A further object of the present invention is to provide for a "no product-no deposit" logic by detecting the missing products in virtue of the possibility of operating each nozzle individually.

A further object of the present invention is to provide for advantages such as ease of maintenance, ease of adjustment, ease of mounting-demounting and ease of product replacement as a result of absence of the rotational or frictional members.

A further object of the present invention is to provide for a continuous food safety as a result of absence of the moving components in contact with the food.

Another object of the present invention is to reduce the maintenance costs and the loss of material in product replacements, as a result of the ease of mounting/demounting, maintenance and cleaning.

Another object of the present invention is to shorten the interruption times, as well as to reduce additional costs added to the product, as a result of the ease of mounting/demounting, maintenance and cleaning.

A further object of the present invention is to allow for each nozzle to deposit different materials.

Structural and characteristic features and all advantages of the present invention will become more apparent from the following drawings and the detailed description given with reference to these drawings. Accordingly, any review should be made taking into account these drawings and the detailed description.

### Brief Description of the Figures:

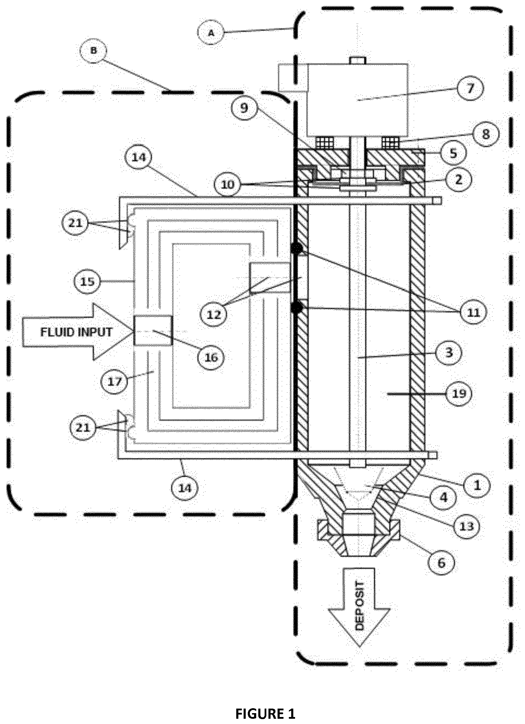

- **FIGURE 1**: is a sectional view of the deposition system according to the invention.

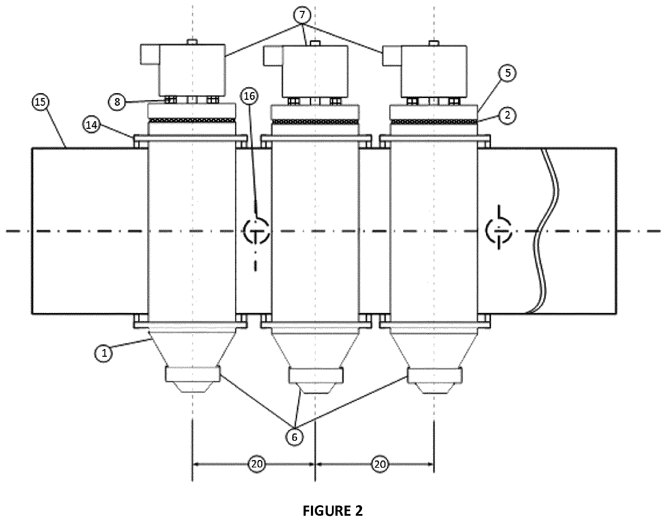

- **FIGURE 2**: is a mounting diagram for the deposition system according to the invention.

### Reference Numerals:

**A.** Deposition Nozzle
**B.** Manifold
   **1.** Nozzle Body
   **2.** Gasket
   **3.** Valve Shaft
   **4.** Piston
   **5.** Lid
   **6.** Nozzle Endpiece
   **7.** Solenoid Valve
   **8.** Fitting Block
   **9.** Nut
   **10.** Washer
   **11.** O-Ring
   **12.** Nozzle Ports
   **13.** Fluid Channel
   **14.** Grip
   **15.** Distribution Manifold
   **16.** Pressure Hole
   **17.** Wall
   **19.** Nozzle Chamber
   **20.** Deposition Pitch
   **21.** Fitting Grooves

### Description of the Invention:

The deposition system according to the present invention is defined in the appended claims and comprises a manifold (8) and a deposition nozzle (A) assembly which is easily mountable on the manifold (B).

The deposition nozzle (A) is provided with a nozzle body (1), a rubber gasket (2) with washer (10) and nut (9) suitable for food used to provide leak-tightness, a valve shaft (3), a piston (4), a solenoid valve (7), a fitting block (8), a deposition fluid channel (13), a nozzle chamber (19) and may comprise a lid (5).

The manifold (B) is provided with nozzle ports (12), a grip (14), a distribution manifold (15), pressure holes (16) and a wall (17).

The deposition nozzle (A) is provided with a piston (4) operating vertically to open and close the fluid channel (13). The fluid flows into the distribution manifold (15) through pressure holes (16) made from behind or above a pipe and applies pressure.

For situations where it is desired to maintain the temperature of the fluid, the distribution manifold (15) is provided with a wall (17) and a refrigerant can flow through the wall (17). The food fluid to be deposited passes from the distribution manifold (15) to each of the deposition nozzles (A) through nozzle ports (12) arranged on the distribution manifold (15) and the deposition nozzle (A) and flows into the nozzle chamber (19). The vertical piston (4) which is normally in closed state keeps the deposition channel (13) closed and the pressure within the distribution manifold (15) and within the nozzle chamber (19) arranged in the nozzle body (1) rises due to the controlled flow rate of the fluid input from the pump. Valve shaft (3) is tightly connected to a rubber gasket (2) suitable for food arranged in the upper part of deposition nozzle (A) for sealing via two washers (10) and a nut (9). The rubber gasket (2) is sealingly connected to the nozzle body (1) via a lid (5). Each deposition nozzle (A) is connected by the solenoid valve (7) attached to the valve shaft (3) and the resilient fitting block (8) arranged on the lid (5) holding the rubber gasket (2). The fitting block (8) allows for connecting the solenoid valve (7) to the nozzle body (1). When the deposition signal is received, the solenoid valve (7) on each of the deposition nozzles (A) is powered, and the valve shaft (3) moves upwards to open the deposition channel (13) for performing the deposition operation. The amount to be deposited can be controlled by adjusting the powering duration of the solenoid valve (7) and accordingly the valve duration of the solenoid valve (7). Deposition signal is triggered in the presence of each deposition site or a product. The diameter and geometry of the optional endpiece (6) located downstream of the deposition nozzle (A) can be changed based on the amount, viscosity, fluidity and density of the fluid. The deposition nozzles (A) can be fixed to the distribution manifold (15) by means of a resilient seal (O-Ring) (11) suitable for food to provide sealing, the grips (14) for quick attachment and the fitting grooves (21). The deposition nozzles (A) can be demounted by separating the solenoid valve (7) sockets and the grips (14). The deposition nozzles (A) can be mounted on the distribution manifold (15) by taking into account the deposition pitch (20). The inventive deposition system completely eliminates the risks of blockade, wearing, leakage an contamination resulting from the narrow running clearances between the rotating and moving valves and the body in the state of the art. The contact provided by the piston (4) between the solenoid valve (7) and the nozzle body (1) is only achieved in a controlled manner in a vertical direction and in a contact opening-closing fashion. Moreover, a deposition control can be achieved based on a signal regarding the presence and absence of the products, and an amount control can be provided automatically by adjusting the opening-closing duration for each deposition nozzle (A) by detecting the amounts deposited by each deposition nozzle (A). For fluids requiring temperature control, the distribution manifold (15) can exchange heat with the deposition nozzles (A).

Since they are demountable and consists of individual components, the deposition system, the deposition nozzle (A) and the manifold (B) of the invention have a structure which requires no maintenance, which can be adjusted easily, which avoids contamination, which is leaktight and which can be opened and closed individually.

## Claims

1. A food filling deposition system comprising:
• a **deposition nozzle (A)** provided with a piston (4) connected to a valve shaft (3) and operated in a vertical direction for opening and closing a fluid channel (13) in order to perform a deposition; a solenoid valve (7) powered to move the valve shaft (3) vertically for controlling the amount to be deposited by adjusting the powering duration and the valve duration; a fitting block (8) connecting the solenoid valve (7) to a nozzle body (1); and a nozzle chamber (19) arranged in the nozzle body (1) for allowing a food fluid to be deposited to pass through a distribution manifold (15); and
• a **manifold (B)** provided with nozzle ports (12) arranged on the distribution manifold (15) and the deposition nozzle (A) for allowing food fluid to be deposited to flow from the distribution manifold (15) to each nozzle (A); pressure holes (16) arranged on a pipe for allowing the fluid to flow into the distribution manifold (15) and providing pressure; a wall (17) through which a refrigerant flows in situations where it is desired to maintain the temperature of the fluid; a grip (14) for demounting the deposition nozzles (A); and a distribution manifold (15) to provide heat exchange for the deposition nozzles (A) for the fluids requiring temperature control,
**characterized in that** the food filling deposition system comprises a leaktight connection to the valve shaft (3) for sealing of the upper part of the deposition nozzle (A) by means of a rubber gasket (2) suitable for food, a washer (10) and a nut (9).

2. A food filling deposition system according to Claim 1, **characterized by comprising** an endpiece (6) for adjusting the diameter and geometry of the fluid output from the deposition nozzle (A) based on the amount, viscosity, fluidity and density of the fluid.

3. A food filling deposition system according to Claim 1, **characterized in that,** said food filling deposition system having a structure allowing for a connection providing for the deposition nozzles (A) to be mounted on the distribution manifold (15) at different intervals (pitches) (20).

## Patentansprüche

1. Ein System zur Ablagerung von Lebensmittelfüllungen umfassend:
• eine Ablagerungsdüse (A), die mit einem Kolben (4) versehen ist, der mit einem Ventilschaft (3) verbunden ist und in einer vertikalen Richtung zum Öffnen und Schließen eines Fluidkanals (13) betrieben wird, um eine Ablagerung durchzuführen; ein Magnetventil (7), das angetrieben wird, um den Ventilschaft (3) zu bewegen
ein Magnetventil (7), das angetrieben wird, um die Ventilschaft (3) vertikal zu bewegen, um die abzuscheidende Menge durch Einstellen der Antriebsdauer und der Ventildauer zu steuern; einen Anschlussblock (8), der das Magnetventil (7) mit einem Düsenkörper (1) verbindet; und eine Düsenkammer (19), die in dem Düsenkörper (1) angeordnet ist, um zu ermöglichen, dass eine abzuscheidende Lebensmittelflüssigkeit durch einen Verteiler (15) gelangt; und
• einen Verteiler (B), der mit Düsenöffnungen (12) versehen ist, die an dem Verteiler (15) und den Ablagerungsdüsen (A) angeordnet sind, damit die abzulagernde Lebensmittelflüssigkeit von dem Verteiler (15) zu jeder Düse (A) fließen kann; Drucklöcher (16), die an einem Rohr angeordnet sind, damit die Flüssigkeit in den Verteiler (15) fließen kann und Druck erzeugt wird; eine Wand (17), durch die ein Kühlmittel in Situationen fließt, in denen die Temperatur des Fluids aufrechterhalten werden soll; einen Griff (14) zum Abmontieren der Ablagerungsdüsen (A); und einen Verteiler (15), um einen Wärmeaustausch für die Ablagerungsdüsen (A) für die Fluide, die eine Temperaturkontrolle erfordern, bereitzustellen,
**dadurch gekennzeichnet, dass** das Abfüllsystem für Lebensmittel eine dichte Verbindung mit dem Ventilschaft (3) zum Abdichten des oberen Teils der Ablagerungsdüsen (A) mittels einer für Lebensmittel geeigneten Gummidichtung (2), einer Unterlegscheibe (10) und einer Schraube (9) umfasst.

2. Ein System zur Ablagerung von Lebensmittelfüllungen nach Anspruch 1, **dadurch gekennzeichnet, dass** es ein Endstück (6) zum Einstellen des Durchmessers und der Geometrie des Flüssigkeitsausgangs aus der Ablagerungsdüse (A) auf der Grundlage der Menge, Viskosität, Fluidität und Dichte der Flüssigkeit umfasst.

3. Ein System zur Ablagerung von Lebensmittelfüllungen nach Anspruch 1, **dadurch gekennzeichnet, dass** das System zur Ablagerung von Lebensmittelfüllungen eine Struktur aufweist, die eine Verbindung ermöglicht, die vorsieht, dass die Ablagerungsdüsen (A) an dem Verteiler (15) in unterschiedlichen Abständen (Teilungen) (20) angebracht werden.

## Revendications

1. Système de dépôt de remplissage d'aliments comprenant :
• une buse de dépôt (A) pourvue d'un piston (4) relié à un arbre de vanne (3) et actionné dans une direction verticale pour ouvrir et fermer un canal de fluide (13) afin d'effectuer un dépôt; une électrovanne (7) alimentée pour déplacer l'arbre de vanne (3); une électrovanne (7) alimentée pour déplacer verticalement l'arbre de vanne (3) pour contrôler la quantité à déposer en ajustant la durée d'alimentation et la durée de vanne ; un bloc de raccord (8) reliant l'électrovanne (7) à un corps de buse (1) ; et une chambre de buse (19) agencée dans le corps de buse (1) pour permettre à un fluide alimentaire à déposer de passer à travers un collecteur de distribution (15) ; et
• un collecteur (B) pourvu d'orifices de buse (12) agencés sur le collecteur de distribution (15) et la buse de dépôt (A) pour permettre au fluide alimentaire à déposer de s'écouler du collecteur de distribution (15) vers chaque buse (A) ; des trous de pression (16) agencés sur un tuyau pour permettre au fluide de s'écouler dans le collecteur de distribution (15) et fournir une pression ; une paroi (17) à travers laquelle un réfrigérant s'écoule dans des situations où l'on souhaite maintenir la température du fluide; une poignée (14) pour démonter les buses de dépôt (A) ; et un collecteur de distribution (15) pour assurer l'échange thermique des buses de dépôt (A) pour les fluides nécessitant un contrôle de température,
**caractérisé en ce que** le système de dépôt de remplissage alimentaire comprend une liaison étanche avec l'arbre de vanne (3) pour assurer l'étanchéité de la partie supérieure de la buse de dépôt (A) au moyen d'un joint en caoutchouc (2) adapté aux aliments, d'une rondelle (10) et d'un écrou (9) .

2. Système de dépôt de remplissage d'aliments selon la revendication 1, **caractérisé en ce qu'**il comprend un embout (6) pour ajuster le diamètre et la géométrie du fluide sortant de la buse de dépôt (A) en fonction de la quantité, de la viscosité, de la fluidité et de la densité du fluide.

3. Système de dépôt de remplissage d'aliments selon la revendication 1, **caractérisé en ce que** ledit système de dépôt de remplissage d'aliments a une structure permettant une connexion permettant aux buses de dépôt (A) d'être montées sur le collecteur de distribution (15) à différents intervalles (emplacements) (20).
